# EUROPÄISCHE PATENTSCHRIFT

(11) **EP 4 267 273 B1**
(45) Veröffentlichungstag und Bekanntmachung des Hinweises auf die Patenterteilung: **25.12.2024**
(21) Anmeldenummer: 22714997.8
(22) Anmeldetag: 09.03.2022
(51) Int. Cl.: B01D 39/08, B01D 39/20, A41D 13/11, A62B 23/02

(54) **GESICHTSMASKE ZUM SCHUTZ VOR VIRALEN ODER BAKTERIELLEN INFEKTIONEN**
FACE MASK FOR PROTECTION AGAINST VIRAL OR BACTERIAL INFECTIONS
MASQUE FACIAL POUR LA PROTECTION CONTRE DES INFECTIONS VIRALES OU BACTÉRIENNES

(30) Priorität: 09.03.2021 DE 102021105603
(43) Veröffentlichungstag der Anmeldung: 01.11.2023
(73) Patentinhaber: ISSA, Esmail, 98693 Ilmenau (DE); Rädlein, Edda, 98701 Großbreitenbach (DE); Krieger, Uwe, 99095 Schwerborn (DE)
(72) Erfinder: ISSA, Esmail, 98693 Ilmenau (DE); Rädlein, Edda, 98701 Großbreitenbach (DE); Krieger, Uwe, 99095 Schwerborn (DE)
(74) Vertreter: Engel, Christoph Klaus
(86) Internationale Anmeldenummer: PCT/EP2022/056066
(87) Internationale Veröffentlichungsnummer: WO 2022/189522

(56) Entgegenhaltungen:
- CN-A- 111 068 406
- CN-A- 111 530 197
- DE-U1- 202020 105 751
- KR-B1- 102 161 587
- US-A1- 2006 182 670
- US-A1- 2008 083 411

## Beschreibung

Die vorliegende Erfindung bezieht sich im Allgemeinen auf die biomedizinische Technik und im Besonderen auf eine antiepidemische Schutzmaske sowie deren Herstellung. In bevorzugten Ausführungsformen dient die Schutzmaske der Abschirmung des Gesichts vor viralen und bakteriellen Infektionen, insbesondere vor Corona-Viren, welche in Krankenhäusern und anderen Hotspots vermehrt vorkommen. Darüber hinaus ist die Erfindung auch für die Behandlung bei chronischen Erkrankungen oder zur Verkürzung der Genesungszeit bei temporären Erkrankungen der Atemwege vorteilhaft einsetzbar.

Bei der Bekämpfung von Pandemien, hervorgerufen durch virale Infektionen der Atemwege, z. B. durch das Corona-Virus COVID-19, das Severe Acute Respiratory Syndrome (SARS), das Middle East Respiratory Syndrome (MERS), die Spanische Grippe (H1N1), die Schweinegrippe (H1N1/09-Virus) oder das Human-Rhinovirus (HRV), treten bekannter Weise massive Probleme auf. Mit Hilfe geeigneter Impfstoffe und Medikamente [1] oder durch umfassende Vorsichtsmaßnahmen, wie Quarantäne oder die Einführung von allgemeinen Abstandsregelungen für die Bevölkerung, wird derzeit versucht, die Ausbreitung dieser Infektionen schnellstmöglich zu bekämpfen. Daneben werden zur Identifikation und Behandlung einer Virusinfektion auf biomedizintechnischer Ebene Instrumente, wie z. B. intelligente Körpertemperaturdetektoren, sowie verschiedene Hygienelösungen, wie beispielsweise Masken, Injektionsnadeln und Beatmungsgeräte, bereitgestellt [2-4].

Aus dem Stand der Technik sind verschiedene Lösungen für Gesichtsmasken bekannt. Beispielsweise wurden in [5] Vorrichtungen für den Gesichtsschutz aus kunststoffbeschichteten Materialien in Kombination mit Holzkohlesubstanzen vorgestellt, die mit Hilfe von 3D-Druckverfahren hergestellt werden und einen Ausbruch des Corona-Virus verhindern sollen.

Weiterhin wurde in [6, 7] eine Gesichtsmaske aus einem mit Natriumchloridsalz beschichtetem Material vorgeschlagen, mit der innerhalb von 5 min eine Dekontamination erzielt werden kann, bei der langlebige Organismen auf ihrer Außenfläche abgetötet werden. Diese Dauer für die Desinfektion der äußersten Maskenoberfläche, wird jedoch als zu zeitaufwändig angesehen.

Aus dem Stand der Technik bekannte Filtermasken, die zur Personenschutzausrüstung eingesetzt werden, wie z. B. chirurgische oder N90-, N95- und N100-Schutzmasken, filtern oder blockieren nicht sehr kleine Partikel (≤ 0,1 pm). Sie sind in der Regel aus natürlichen Wollfasern und mehrlagigen Vliesstoffen aufgebaut, die aus Geweben auf Basis von Kunststoffen wie Polypropylen, Polystyrol, Polycarbonat, Polyethylen oder Polyester mit einer Maschengröße von circa 1 µm bestehen. Dagegen enthalten biologisch/chemische Schutzmasken in der Regel mit Ag dotierte Partikel [15]. Die Filterprinzipien beruhen darauf, dass große Partikel aus der Luft abgelenkt werden und auf der Faser haften bleiben. Die feineren (<0,1 pm) kollidieren aufgrund des Diffusionsweges während der Strömung und bleiben so an den Fasern haften. Außerdem werden elektrostatisch geladene Fasern eingesetzt, um entgegengesetzt geladene Teilchen anzuziehen. Selbst wenn der Maskenstruktur UV-katalysierte Wirkstoffe zugesetzt werden, wird eine weitere Filteranordnung mit möglichst kleiner Porengröße entweder als zusätzliches Filterelement oder als ein in den photokatalytischen Wirkstoff integriertes Filtergewebe in der Praxis eingesetzt. Dies kann dazu dienen, die Filterfunktion durch Desinfektion möglicher Mikroorganismen, die im Gewebe zurückgehalten werden oder möglicherweise entwichen sind, zu verbessern. Daher werden als erste Voraussetzung extrem feine poröse Filter angestrebt, diese verursachen jedoch Kommunikations- und/oder Atmungsschwierigkeiten und bei Verstopfung oder Verschmutzung die Notwendigkeit eines Filterwechsels.

Andere Luftfiltermasken, die für verschiedene Funktionen geeignet sind, sind in [8-11] offenbart.

Alle diese genannten Lösungen sind jedoch für eine virale oder bakterielle Desinfektion der Atemluft ungeeignet.

Daneben ist bekannt, dass zur Desinfektion von medizinischen Geräten und Operationssälen in Krankenhäusern, die mit so genannten selbst-reinigenden Oberflächen ausgestattet sind, photokatalytische Beschichtungen, beispielsweise TiO₂, in Kombination mit einer UV-Strahlung genutzt werden [12, 13].

Aufgrund seiner großen Bandlückenenergie von 3,2 eV ist TiO₂ in der Lage, kurzwellige Strahlung, wie UV-Licht, zu absorbieren. Durch diese Photoaktivierung werden die Elektronen in der äußersten Schale des TiO₂ zur Mobilisierung angeregt, wodurch Elektronen-Loch-Paare entstehen. Wenn die angeregten Elektronen mit den Elektronen der äußeren Schale von Sauerstoff- oder H₂O-Molekülen zusammenstoßen, findet eine Zersetzung statt, die zur Hydroxylierung und Ionisierung dieser Moleküle führt. Die entstehenden Radikale sind ihrerseits ebenfalls instabil und wenn sie mit Mikroorganismen in Kontakt kommen, peroxidieren sie diese und zerstören ihre Nukleinsäuren, wodurch ihre Replikation gestoppt wird und sie zerstört werden.

Verschiedene Ansätze zur Entwicklung von selbst-reinigenden Masken gegen Toxine stützen sich auf diese Erkenntnisse, so dass sie beispielsweise bei der Bekämpfung von Buschfeuer und im Krieg, aber auch an biologisch verseuchten Orten, insbesondere zur Bekämpfung von viralen oder mikrobiellen Epidemien, eingesetzt werden können. Insbesondere wurden Gesichtsmasken aus Papiergewebe mit einer TiO₂-Lösung imprägniert, die durch Sonnenlicht oder mittels fluoreszierenden Lichtquellen aktiviert werden kann. Eine derart vorbereitete Maske baut Toxine, wie Formaldehyd und dergleichen ab, wenn sie für medizinische Zwecke verwendet wird (US 5 744 407 A).

Bei einem weiteren Lösungsansatz für eine einseitige Gesichtsabschirmung wurden ein Auslass für die ausgeatmete Luft und Patronen mit zwei gestapelten Filterelementen für die einzuatmende Luft in die Maske integriert (US 2015/0114397 A1). Dabei ist das innere Filterelement als ein wabenförmiges Maschensubstrat ausgeführt, welches aus einem Aluminiumgitter oder Aluminiumkissen mit Gitter besteht, und Maschenöffnungen mit einer Größe von bis zu 180 µm aufweist und mit TiO₂ beschichtet wurde. Dieses Element wird photokatalytisch durch UV-Licht im Wellenlängenbereich 240-280 nm aktiviert. Das äußere Filterelement ist ein Aktivkohlefilter oder ein Filter mit Silber-Nanopartikeln.

Ein anderer Vorschlag für einen Einweg-Kopfschutz besteht aus mehreren Teilen, z. B. aus Kohlenstoff-Filtern, einem nanoskaligen photokatalytischen Titandioxid-Netz, welches durch eine eingebaute UV-Lampe aktiviert wird, und einem Nano-Silber-Ionenfilter (CN 1 03 656 908 A). Diese komplexe Konfiguration ist vorteilhaft, um die Reinigung und gleichzeitige Desinfektion der Atemluft zu gewährleisten.

Neben der Einwegfunktion wird jedoch eine Bleischicht als Abschirmung der UV-Strahlen verwendet, was aufgrund der Gesundheitsrisiken von Nachteil ist. Des Weiteren wird Glasfasermaterial verwendet, um textile Gewebe mit variabler Porengröße zusammenzustellen und als Maskenfilter für Gifte und mikrobielle oder bakterielle Stoffe entweder mit oder ohne Integration eines UV-katalysierten TiO₂ zu nutzen (CN 1 03 656 908 A, US 8 828 129 B2, US 5 720 280).

Die DE 10 2007 034 879 A1 beschreibt ein Filterelement, welches auf der Kombination eines porösen Trägermaterials mit lichtleitenden Eigenschaften mit einer photoaktiven Substanz beruht. Bei den dort vorgeschlagenen Trägermaterialien handelt es sich um Polymere, Polymermischungen oder -fasern. Durch die Beschichtung sollen auch bei Porendurchmessern bis zu 10 µm Mikroorganismen inaktiviert werden.

Die DE 10 2004 008 931 B4 beschreibt poröses Glas und poröse Glaskeramik als biozides Agens, allerdings liegt dieses in Pulverform, nicht monolithischer Form vor.

Die US2008083411 A1 offenbart eine photokatalytisch wirksame Atemschutzmaske mit integrierten LED UV-Quellen.

Eine Aufgabe der vorliegenden Erfindung ist es, die im Stand der Technik erläuterten Nachteile zu überwinden und eine mehrfach verwendbare, selbstdesinfizierende Gesichtsmaske zum Schutz vor viralen oder bakteriellen Infektionen mit bidirektionaler desinfizierender Wirkung bereitzustellen, mit der einerseits gesunde Menschen und andererseits das Umfeld von infizierten Menschen vor Ansteckungsgefahren geschützt werden können.

Erfindungsgemäß gelingt die Lösung dieser Aufgabe mit einer Gesichtsmaske gemäß Anspruch 1.

Die Gesichtsmaske dient zum Schutz vor viralen oder bakteriellen Infektionen. Die Gesichtsmaske besitzt mindestens einen Inhalationsabschnitt zur Abdeckung der Mund-Nase-Region eines Nutzers. Der Inhalationsabschnitt umfasst einen Verbund aus mindestens zwei transluzenten oder semitransparenten Glasschichten, wobei die Glasschichten als poröse Glasplatten ausgeführt sind und zumindest temporär von zumindest einer UV-C/A-Quelle bestrahlt werden, die ihrerseits Bestandteil der Gesichtsmaske ist.

Die vorliegende Erfindung kann eine wesentliche Rolle bei den derzeitigen Bemühungen spielen, die Kurve des Ausbruchs des neuartigen Corona-Virus auf der ganzen Welt abzuflachen. Dafür wird eine bidirektional wirkende Gesichtsschutzmaske bereitgestellt, welche die Atemwege und vorzugsweise auch die Augen eines Menschen vor einer Virusinfektion schützt und zudem mehrfach verwendbar und selbstdesinfizierend ist.

Im Gegensatz zu den bisher genutzten konventionellen Masken besteht die vorgeschlagene Gesichtsschutzmaske nicht aus textilem Gewebe basierend auf Polymeren oder natürlichen Fasern, wie zum Beispiel Baumwolle, sondern aus porösen Glasplatten auf welche eine dünne, katalytisch wirksame Schicht aufgebracht wurde. Letztere ist mit Hilfe von Licht im ultravioletten Wellenlängenbereich (UV) bis hin zum sichtbaren Spektralbereich aktivierbar.

Im Gegensatz zum Stand der Technik gemäß der DE 10 2007 034 879 A1, wird in der vorliegenden Erfindung ein anorganisches monolithisches Trägermaterial eingesetzt. Dessen Vorteile sind insbesondere Transparenz oder Transluzenz, zumindest in Teilen; geringe Verweilzeiten der noch nicht deaktivierten Mikroorganismen; und die Möglichkeit von Reinigungs- bzw. Regenerationsprozessen der Oberflächen nach bestimmten Einsatzzeiten.

Gemäß einer bevorzugten Ausführungsform ist die UV-C/A-Quelle an der Außenkontur des Inhalationsabschnitts umlaufend zwischen den Glasschichten angeordnet. Besonders bevorzugt stellt die UV-C/A-Quelle Licht im Wellenlängenbereich 185nm - 280 nm bereit, mit welchem die Glasschichten bestrahlt werden. Vorzugsweise sind die Glasschichten selektiv mit photoaktiven Dünnfilmen aus einem transparenten leitenden Oxid (TCO) beschichtet. Besonders bevorzugt besitzt das transparent leitende Oxid eine Dicke von 50 nm bis 1000 nm. Vorteilhaft ist das transparent leitende Oxid ein dotierter Halbleiter aus TiOx, ZnO, SnO2 und/oder SiOₓ.

Vorteilhafte Ausführungsformen zeichnen sich dadurch aus, dass die Glasschichten planar oder anwendungsspezifisch geformt ausgeführt sind und die Poren in den Glasschichten eine Größe im Bereich von 1 nm bis 1µm aufweisen.

Bei einer bevorzugten Ausführungsform ist die Außenkontur des Inhalationsabschnitts mit einer elastischen Barriereschicht aus einem für UV-Strahlen zumindest semitransparenten Material abgedeckt.

Eine bevorzugte Ausführungsform der Gesichtsmaske besitzt eine elastische Halterung, mit der sie am Kopf des Nutzers positionierbar ist, wobei vorzugsweise in die Halterung Akkumulatoren zum Betreiben der UV-C/A-Quelle und/oder zum Beheizen der TCO-Schichten integriert sind.

Die erfindungsgemäße Gesichtsmaske umfasst vorzugsweise den Inhalationsabschnitt und ein Augenschild, wobei der Inhalationsabschnitt vorzugsweise als Doppel- oder Mehrschichtstruktur aus porösen, kolloidalen Gitter- oder Textilglasplatten ausgeführt ist. Eine weitergebildete Ausführungsform trägt das transparente Augenschild an einem oberen Teil des Inhalationsabschnitts. Mit Hilfe dieses Augenschutzes kann der direkte Kontakt der Augen mit infizierten Materialien verhindert werden, wodurch sich die Schutzwirkung der Gesichtsmaske weiter steigert. Bevorzugt ist das Augenschild ebenfalls mit einer Barriereschicht, insbesondere aus schwarzem Silikon umrandet.

In einer weiter bevorzugten Ausführungsform ist der Inhalationsabschnitt durch Ätzen von durchgehenden Löchern, sogenannten ausgerichteten Poren (Pinholes) erzeugt, die insbesondere mit Hilfe der Photolithographietechnik herstellbar sind.

Vorzugsweise werden die Glasschichten selektiv mit photoaktiven Filmen aus verschiedenen Halbleitern wie z. B. TiO₂/TiOₓ (auch schwarzes Titandioxid genannt), ZnO, SnO₂, SiOₓ, etc. in einer bevorzugten Dicke von 50 nm bis 1000 nm beschichtet. Diese Halbleiter sind wiederum vorzugsweise mit Elementen dotiert, welche keine oder nur eine sehr geringe Bandlücke zwischen Valenz- und Leitungsband aufweisen, z. B. Stickstoff, Wasserstoff, Graphene, Indium, Palladium, Bor, u.a., so dass eine dünne Schicht aus transparentem, elektrisch leitfähigem Oxid (TCO) entsteht.

Eine weitergebildete Ausführungsform der Gesichtsmaske besitzt außerdem eine Befeuchtungsquelle bzw. einen Feuchtigkeitsgenerator, der ein Flüssigkeitsreservoir und Einheiten zur Weiterleitung der Flüssigkeit an den Glasschichtenverbund umfasst. Ebenso ist es vorteilhaft, wenn die Gesichtsmaske eine oder mehrere Einheiten zur Erfassung und Stabilisierung der Temperatur und/oder der Feuchtigkeit der durch den Inhalationsabschnitt vom Nutzer einzuatmenden Luft aufweist. Damit kann der Peroxidationseffekt und damit die Zersetzung von Viren oder Bakterien nochmals deutlich erhöht werden. Vorzugsweise ist eine kurzwellige UV-C/A-Strahlungsquelle mit der transparenten / transluzenten Glasstruktur so gekoppelt, dass sie deren gesamte Oberfläche bestrahlt, während das transparente Augenschild durch eine schwarze Barriere abgeschattet wird. Diese Anordnung kann kontinuierlich betrieben werden, z. B. in Kombination mit einer wiederaufladbaren Powerbank.

Da die erfindungsgemäße Gesichtsmaske als bidirektionaler Schutz sowohl für infizierte Patienten als auch für nicht infizierte Personen wirkt, kann sie für viele Personengruppen vielfältig eingesetzt werden.

Wie bereits ausgeführt, umfasst die erfindungsgemäße Gesichtsmaske einen Verbund aus mindestens zwei Schichten aus transparenten / transluzenten Gläsern, welche als poröse Filter mit Öffnungen von beispielsweise wenigen Mikrometern oder Bruchteilen davon ausgebildet sind. Dieser Aufbau ermöglicht eine Luftfilterung, eine bequeme Atmung und gleichzeitig eine klare Sprachübertragung, wobei insbesondere der Inhalationsabschnitt der Maske so ausgeformt ist, dass er sich an die Gesichtsform anpasst und die Mund-Nase-Region des Gesichts dicht bedeckt.

Die innere Oberfläche beziehungsweise Oberflächen des Inhalationsabschnitts sind mit photoaktiven, dünnen Schichten aus vorzugsweise transparenten und elektrisch leitfähigen Elementen oder Verbindungen oder Oxiden, beispielsweise TiOₓ, ZnO, SiOₓ, etc. überzogen, welche die UV-C/A Strahlung reflektieren und keine für die Haut schädliche Strahlung durch die Glasschichten hindurch nach außen dringen lassen. Diese sogenannten TCO-Schichten (transparent conducting oxide, transparente Metalloxide) ermöglichen darüber hinaus eine Erwärmung der Atemluft mit Hilfe einer elektrischen Widerstandsbeheizung, welche die Desinfektionswirkung ebenfalls positiv beeinflusst.

In einer abgewandelten Ausführung weisen die photoaktiven, dünnen Schichten zusätzlich noch eine oder mehrere Dotierungen auf, so dass auch das Gesicht des Maskenträgers vor der UV-Strahlung geschützt wird.

Der erzeugte photokatalytische Effekt führt zu einer Zersetzung der H₂O- und O₂-Moleküle der Atemluft und generiert ionisierte Hydroxyl- (OH-) sowie Sauerstoff-Ionen (O₂-) auf der z.B. mit TiO₂-beschichteten Glasoberfläche. Infolgedessen kommt es zur Peroxidation organischer Stoffe bis zur Zerstörung ihrer Nukleinsäuren und ihrer DNA-Ketten, wodurch Viren oder Bakterien vollständig zerstört und abgebaut werden; solche Prozesse sind allgemein in [12, 13] beschrieben.

Die UV-C/A Lichtquelle ist vorzugsweise umlaufend so zwischen den Glas-Filterebenen angeordnet, dass Licht im bevorzugten Wellenlängenbereich 185-280 nm auf die beschichteten Glasflächen trifft und die desinfizierende Wirkung hervorruft. Zur Abschirmung der Augen sowie der Augenpartie des Gesichtes vor der UV-Strahlung ist in Richtung der Augen eine Barriereschicht (Schutzschicht) vorgesehen.

Zur Reduzierung der Herstellungskosten kann bei einer abgewandelten Ausführungsform der Gesichtsmaske auf die zuvor beschriebene Beschichtung der Glasschichten verzichtet werden, wenn die Wirkung der UV-C/A Lichtquelle bereits ausreichenden Schutz vor viralen und bakteriellen Infektionen bietet.

Die Außenkontur des Inhalationsabschnitts ist von einer Barriereschicht (Schutzschicht), zum Beispiel aus schwarzem Silicon, umrandet. Dies dient der Abschirmung der UV-C/A-Lichtquelle, sodass zum einen kein UV-Licht nach außen dringt und andererseits die Gesichtsregion gut abgedeckt wird.

In einer weiteren Ausführungsform der Gesichtsmaske ist zusätzlich ein externer Feuchtigkeitsgenerator integriert. Mit Hilfe dieses Generators kann dem Inhalationsabschnitt der Gesichtsmaske mit Wasser befeuchtete Luft zugeführt werden. Dazu wird die befeuchtete Luft beispielsweise durch ein thermisch isoliertes Rohrsystem geleitet, dringt in die porösen Glasschichten ein und kann deren Oberflächen ebenfalls mit einem Feuchtigkeitsfilm benetzen. Die Befeuchtung der Luft kann insbesondere für Menschen mit Atemwegserkrankungen vorteilhaft sein. So wird beispielsweise bei chronischen Erkrankungen der Atemwege vorwiegend warme und feuchte Luft für die Heilung benötigt. Hierzu können gezielt die TCO-Schichten aktiviert und elektrisch beheizt und folglich auch die feuchte Luft erwärmt werden. Die relative Feuchtigkeit (rF) und die Temperatur der Luft lassen sich über Feuchtigkeitssensoren ermitteln und mit Hilfe einer Mikroprozessor-gestützten Steuerung stabilisieren, zum Beispiel auf Werte von 40%rF und 38°C.

Ebenso kann die Gesichtsmaske für die Behandlung von Erkältungskrankheiten, wie Husten oder Schnupfen, genutzt werden, für die eine relativ kühle Luft (z.B. Temperaturen zwischen 19-20°C) erforderlich ist. Dies wird durch Abschaltung der elektrischen Beheizung der TCO-Schichten und durch ausschließliche Nutzung des kühlenden Effekts, der bei der Wasserverdampfung entsteht, realisiert.

Der obere Teil der Gesichtsmaske ist bevorzugt als Augenschild aus einem transparenten Material, wie zum Beispiel Kalk-Natron-Glas, oder einem Kunststoff, z.B. Polyethylen, ausgeführt. Das Augenschild kann ebenfalls mit einer Schutzschicht aus schwarzem Silicon zum Schutz gegen mechanische Beanspruchung versehen sein.

Die elektrische Beheizung der TCO-Schichten und das Betreiben der UV-Lichtquelle erfolgt vorzugsweise mittels wiederaufladbarer Akkumulatoren (Powerbank), welche sich in ein vorzugsweise elastisches Kopfband oder dergleichen integrieren lassen oder extern positioniert werden.

Im Gegensatz zu Gesichtsmasken nach dem Stand der Technik, bei denen vorwiegend Gewebe mit Fasern auf Basis von Cellulose, Wolle, Kunststoffen oder Glas eingesetzt werden, besteht die erfindungsgemäße Gesichtsmaske aus porösen Glasschichten, die flach oder anwendungsspezifisch vorgeformt das Gesicht abdecken. Diese Glasschichten sind so strukturiert, dass sie semitransparent für Licht und durchlässig für Luft sind. Dies ermöglicht sowohl eine angenehme Atmung als auch eine einfache Kommunikation mit der Umgebung. Diese Funktionalität wird maßgeblich durch die Porosität der Glasschichten gezielt eingestellt. Das Glassubstrat dient darüber hinaus als Träger für dünne Beschichtungen aus dotierten elektrisch halbleitenden Materialien, z. B. TiO₂, sogenannten TCO-Schichten (transparent conducting oxide, transparente Metalloxidschichten), so dass eine desinfizierende und reflektierende Wirkung entsteht; die Grundlagen dieser Effekte sind in [13, 14] beschrieben. Diese Wirkung wird dadurch erzielt, dass die Schichten gezielt beheizt werden und / oder mittels Bestrahlung durch eine UV-C/A-Lichtquelle und den damit verbunden photokatalytischen Effekt eine hinreichende Desinfektion beim Durchströmen der Atemluft durch die Gesichtsmaske erzielt wird. Zusätzliche Multifunktionalität über die desinfizierende Wirkung hinaus, zum Beispiel für eine Verwendung der Gesichtsmaske für Heilanwendungen, kann mit Hilfe der gezielten Einstellung der Oberflächeneigenschaften der Glasbeschichtungen und zusätzliche Zuführung befeuchteter Luft realisiert werden. Dies wird ermöglicht durch hydrophile, das heißt "wasseranziehende", Oberflächeneigenschaften (hohe Oberflächenenergie), sodass die Wassermoleküle die Oberflächen vollständig benetzen. Die Neuartigkeit einer solchen Gesichtsmaske beruht auf der Möglichkeit einer gezielten Funktionalisierung der porösen Glasfilter mittels der beschriebenen Beschichtungen und in Kombination mit einer oder mehreren UV-Lichtquellen sowie bevorzugt mit einem externen Feuchtigkeitsgenerator, sodass die Glasschichten elektrisch beheizt, photokatalytisch reaktiviert und bevorzugt hydrophil benetzt werden können.

Mit der vorliegenden Erfindung soll der konventionelle Dekontaminationsmechanismus neben seiner selbstdesinfizierenden Eigenschaft mit einem selbstreinigenden Mechanismus erweitert werden. Realisierbar wird dies durch die Funktionalisierung der Metalloxidschichten, z.B. TCOs. Dies ist auf das hydrophile Verhalten der TCOs zurückzuführen, welches dafür verantwortlich ist, dass die Mikroorganismen an diesen Schichten nicht haften. Wenn die Glas-Oberflächen, z.B. mit N2 dotiert oder einer UV-Strahlung ausgesetzt werden, weisen die TCOs neben der bekannten erhöhten Photoaktivität eine deutlich erhöhte Hydrophilie, auch Superhydrophilie genannt, auf; die grundlegenden Effekte sind in [19, 20] beschrieben. Folglich lagern sich die Viren oder Bakterien nicht in den Poren ab, verursachen also keine Verstopfung, sondern werden in diesen zerstört.

Porös strukturiertes, transluzentes oder semitransparentes Glas, welches planar oder vorgeformt ausgeführt ist und mit photokatalytischen beziehungsweise TCO-Beschichtungen funktionalisiert wurde, ist bisher in praktischen Anwendungen nicht bekannt. Die Erfindung nutzt nun die Möglichkeit der Herstellung von porösem Glas mit einer Porengröße von 1 nm bis 1 µm sowie der Möglichkeit die Form gezielt an bestimmte Bedürfnisse anzupassen und dabei seine Semitransparenz bis zu einem gewissen Grad zu erhalten [21, 22], um die erfindungsgemäße Gesichtsmaske zu realisieren und vorteilhaft für die Bekämpfung von Infektionen und Pandemien, ausgelöst durch Viren, wie COVID 19, einsetzbar zu machen.

Gemäß einer abgewandelten Ausführungsform besteht mindestens eine der transluzenten oder semitransparenten Glasschichten aus einem mittels eines Sol-Gel-Vefahren hergestellten Material. Solche Materialien werden auch als Aerogel bezeichnet und stellen hochporöse Festkörper dar, bei denen bis zu 99,98 % des Volumens durch Poren gebildet ist. Das in dem Sol-Gel-Verfahren hergestellte Material eignet sich für die erfindungsgemäße Anwendung, soweit die Poren eine Größe im Bereich von 1 nm bis 1µm aufweisen und das Material transluzent oder semitransparent ist, insoweit also einem Glas entspricht, um die UV-Strahlung zu leiten. Als Material für mindestens eine der transluzenten oder semitransparenten Glasschichten eignet sich insbesondere ein Silizium basiertes Aerogel. Bevorzugt können ein oder mehrere jeweils einige hundert Mikrometer dicke Aerogel-Wafer mit Polymeradditiven verbunden werden, um die mechanische Festigkeit zu erhöhen.

Weitere Einzelheiten ergeben sich aus der nachfolgenden Beschreibung einer bevorzugten Ausführungsform der Erfindung, unter Bezugnahme auf die Zeichnung. Es zeigen:
- Fig. 1: eine vereinfachte Frontalansicht auf eine erfindungsgemäße Gesichtsmaske, die von einem Nutzer auf dem Gesicht getragen wird;
- Fig. 2: eine vereinfachte, teilgeschnittene Seitenansicht des Nutzers mit der Gesichtsmaske sowie eine Detailzeichnung eines Abschnitts der Gesichtsmaske im Schnitt.

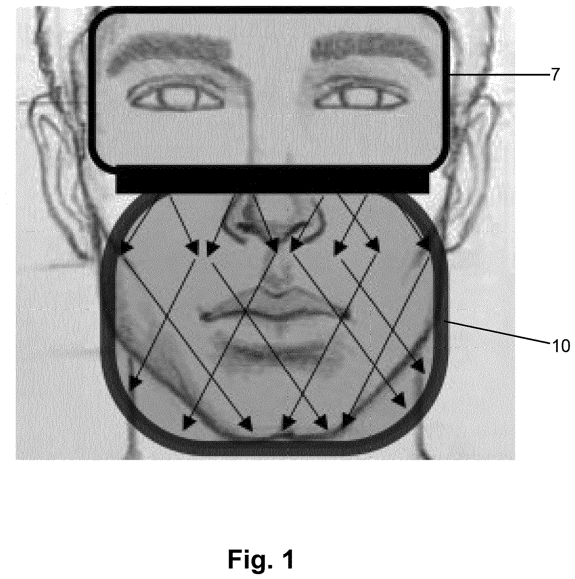

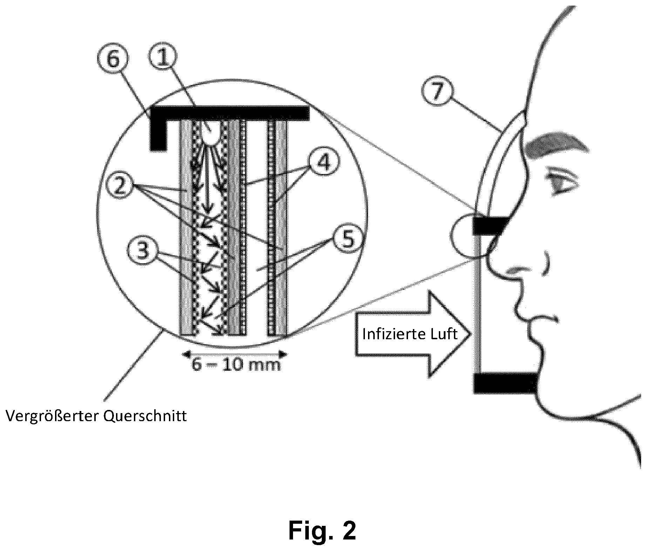

Die Figuren 1 und 2 zeigen gemeinsame eine Ausführungsform der erfindungsgemäßen Gesichtsmaske, die zum Schutz vor viralen oder bakteriellen Infektionen dient. Die Gesichtsmaske besitzt in dieser Ausführung einen Inhalationsabschnitt 10 zur Abdeckung der Mund-Nase-Region, und ein Augenschild 7, welcher oben am Inhalationsabschnitt angebracht oder einstückig angeformt ist. Der Inhalationsabschnitt 10 ist in der gezeigten Ausführungsform ein Verbund aus drei transluzenten oder semitransparenten Glasschichten 2, wie dies in der Detailzeichnung in Fig. 2 gut erkennbar ist. Die Glasschichten 2 sind mit zahlreichen Durchgangslöchern ausgerüstet, um Luft durchtreten zu lassen. Weiterhin ist im Randbereich zwischen der äußeren und der mittleren Glasschicht eine bzw. mehrere UV-C/A-Quellen 1 vorgesehen, welche TiO₂-Schichten 3 bestrahlt, die auf den zueinander gewandten Oberflächen der äußeren und der mittleren Glasschicht 2 aufgebracht sind. Stattdessen sind auf den zueinander gewandten Oberflächen der mittleren und der inneren Glasschicht 2 jeweils TCO-Beschichtungen aufgebracht. Zwischen den jeweils zueinander gewandten Oberflächen der Glasschichten verbleibt jeweils ein Luftspalt 5. Die Gesamtbreite dieser Schichtenanordnung liegt im Bereich von 6 bis 10 mm. Der Inhalationsabschnitt 10 ist von einer Barriereschicht 6 umrandet, die beispielsweise aus schwarzem Silikon besteht.

Die vorliegende Erfindung vereint zahlreiche Funktionen und Vorteile in einer einzigen Lösung. Dazu zählen im Einzelnen die desinfizierende und selbstreinigende Wirkung (Wiederverwendbarkeit), die bidirektionale Funktionsweise (Luftfilterung beim Ein- und Ausatmen), die Möglichkeit der Bereitstellung von temperierter und angefeuchteter Atemluft, der Schutz vor schädlicher UV-Strahlung, die Vermeidung von Chemikalien für die Absorption, der geringe Stromverbrauch und die Möglichkeit der semitransparenten Kommunikation mit anderen Personen.

Mit der erfindungsgemäßen Gesichtsmaske kann außerdem eine definierte Temperatur und eine definierte relative Luftfeuchtigkeit eingestellt, überwacht und geregelt werden. Ebenso kann die Feuchtigkeit der Atemluft und die photothermische Katalyse effektiv kombiniert werden. Schließlich ist auch die Verwendung von UV-Lichtquellen mit verschiedenen Wellenlängen denkbar.

Aus allen diesen vorteilhaften Eigenschaften ergibt sich ein multifunktionaler Nutzen dieser erfindungsgemäßen Gesichtsmaske als antiviraler, antichronischer Husten- und antinasaler Verstopfungsschutz sowie als Beatmungsgerät für infizierte Personen. Ein weiterer Aspekt der Erfindung liegt somit auch in verbesserten Behandlungsmöglichkeiten chronischer oder temporärer Erkrankungen der Atemwege.

### Literaturverzeichnis

[1] - https://www.who.int/
[2] - https://www.bosch-presse.de/pressportal/de/en/combating-the-coronavirus-pandemic-bosch-develops-rapid-test-for-covid-19-209792.html
[3] - https://bioengineering.stanford.edu/research/bioecoronavirus-response
[4] - https://www.openpr.de/news/1039482/Hygiene-ist-die-Basis-Livinguard-Technologie-macht-Krankenhaeuser-Haushalte-Co-sicherer.html
[5] - https://www.controleng.com/articles/universitiesdeveloping-diy-medical-devices-ppe-to-combat-coronavirusspread/
[6] - https://www.businessinsider.de/international/maskcoated-in-salt-neutralizes-viruses-like-coronavirus-2 02 0-2/?r=US&IR=T
[7] - Quan, F. S., Rubino, I., Lee, S. H., Koch, B., & Choi, H. J. (2017). Universal and reusable virus deactivation system for respiratory protection. Scientific reports, 7(1), 1-10.
[8] - https://www.ao-air.com/
[9] - https://www.globex.co.nz/o2o2-pollution-facewear
[10] - https://ifworlddesignguide.com/search?search=mask#/pages/p age/entry/283140-cara-nasal-mask
[11] - https://ifworlddesignguide.com/search?search=mask#/pages/p age/product/207-airborne
[12] - Hajkova, P., Spatenka, P., Horsky, J., Horska, I., & Kolouch, A. (2007). Photocatalytic effect of TiO2 films on viruses and bacteria. Plasma Processes and Polymers, 4(S1), S397-S401.
[13] - Rajh, T., Dimitrijevic, N. M., Bissonnette, M., Koritarov, T., & Konda, V. (2014). Titanium dioxide in the service of the biomedical revolution. Chemical reviews, 114(19), 10177-10216.
[14] - TABATABAIE-RAISSI, Ali; MURADOV, Nazim Z.; FAIREY III, Philip W. Photocatalytic face mask. U.S. Patent Nr. 5,744,407, 1998.
[15] - LITZ, Jeffery C. Chemical and biological protection mask. U.S. Patent Application Nr. 13/784,062, 2015.
[16] - 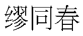 . Anti-haze mask with nanoscale titanium dioxide photocatalysis net and mini-size air purifier. Nr. CN103656908A, 2013.
[17] - VOLO, Giovanni D.; CARABETTA, Salvatore R. Two-stage air filter and mask incorporating the same. U.S. Patent Nr. 8,828,129, 2014.
[18] - ELSTRAN, Gerald V.; MATTILA, Robert J.; PHILLIPS, Jerome D. Attenuator for use with respirators. U.S. Patent Nr. 5,720,280, 1998.
[19] - Zhu, W., Feng, X., Feng, L., & Jiang, L. (2006). UV-Manipulated wettability between superhydrophobicity and superhydrophilicity on a transparent and conductive SnO2 nanorod film. Chemical Communications, (26), 2753-2755.
[20] - Qi, G., Liu, X., Li, C., Wang, C., & Yuan, Z. (2019). The Origin of Superhydrophobicity for Intrinsically Hydrophilic Metal Oxides: A Preferential O2 Adsorption Dominated by Oxygen Vacancies. Angewandte Chemie International Edition, 58(48), 17406-17411.
[21] - Krenkel, S., Uhlig, H., Enke, D., & Rädlein, E. (2015). Manufacture of highly porous, anisotropic glass monoliths with a honeycomb-like structure. Physics and Chemistry of Glasses-European Journal of Glass Science and Technology Part B, 56(4), 149-158.
[22] - Barascu, A., Kullmann, J., Reinhardt, B., Rainer, T., Roggendorf, H., Dubiel, M., & Enke, D. (2012). Preparation of porous glass monoliths with an aligned pore system via stretch forming. Journal of the American Ceramic Society, 95(10), 3013-3015.

## Patentansprüche

1. Gesichtsmaske zum Schutz vor viralen oder bakteriellen Infektionen, aufweisend mindestens eine UV-C/A-Quelle und einen Inhalationsabschnitt (10) zur Abdeckung der Mund-Nase-Region, **dadurch gekennzeichnet, dass** der Inhalationsabschnitt (10) einen Verbund aus mindestens zwei transluzenten oder semitransparenten Glasschichten (2) umfasst, wobei die Glasschichten (2) als poröse Glasplatten ausgeführt sind, auf welche eine dünne, katalytisch wirksame Schicht aufgebracht ist, die mit Hilfe von Licht im ultravioletten Wellenlängenbereich (UV) bis hin zum sichtbaren Spektralbereich aktivierbar ist, und wobei die Glasschichten mit UV-Licht zumindest temporär von der UV-C/A-Quelle (1) bestrahlbar sind.

2. Gesichtsmaske nach Anspruch 1, **dadurch gekennzeichnet, dass** das die UV-C/A-Quelle (1) an der Außenkontur des Inhalationsabschnitts (10) umlaufend zwischen den Glasschichten (2) angeordnet ist und die Glasschichten mit UV-Licht, vorzugsweise im Wellenlängenbereich 185 nm - 280 nm bestrahlt.

3. Gesichtsmaske nach Anspruch 1 oder 2, **dadurch gekennzeichnet, dass** die Glasschichten (2) selektiv mit photoaktiven Dünnfilmen aus einem transparenten leitenden Oxid (TCO) beschichtet sind.

4. Gesichtsmaske nach Anspruch 3, **dadurch gekennzeichnet, dass** das transparent leitende Oxid eine Dicke von 50 nm bis 1000 nm aufweist und ein dotierter Halbleiter TiOx, ZnO, SnO₂ und/oder SiOₓ ist.

5. Gesichtsmaske nach einem der vorhergehenden Ansprüche, **dadurch gekennzeichnet, dass** die Glasschichten (2) planar oder anwendungsspezifisch geformt ausgeführt sind und die Poren eine Größe von 1 nm bis 1µm aufweisen.

6. Gesichtsmaske nach einem der vorhergehenden Ansprüche, **dadurch gekennzeichnet, dass** die Außenkontur des Inhalationsabschnitts (10) mit einer elastischen Barriereschicht (6) aus einem für UV-Strahlen zumindest semitransparenten Material abgedeckt ist.

7. Gesichtsmaske nach einem der vorhergehenden Ansprüche, **dadurch gekennzeichnet, dass** sie einen externen Feuchtigkeitsgenerator aufweist, der ein Flüssigkeitsreservoir und Einheiten zur Weiterleitung der Flüssigkeit an den Glasschichtenverbund umfasst.

8. Gesichtsmaske nach einem der vorhergehenden Ansprüche, **dadurch gekennzeichnet, dass** sie Einheiten zur Erfassung und Stabilisierung der Temperatur und der Feuchtigkeit der einzuatmenden Luft aufweist.

9. Gesichtsmaske nach einem der vorhergehenden Ansprüche, **dadurch gekennzeichnet, dass** am oberen Teil des Inhalationsabschnitts (10) ein transparentes Augenschild (7) angeformt ist.

10. Gesichtsmaske nach Anspruch 9, **dadurch gekennzeichnet, dass** das Augenschild (7) mit einer Barriereschicht aus schwarzem Silikon (6) umrandet ist.

11. Gesichtsmaske nach einem der Ansprüche 1 bis 10, **dadurch gekennzeichnet, dass** sie mit Hilfe einer elastischen Halterung am Kopf eines Nutzers positionierbar ist, wobei in die Halterung Akkumulatoren zum Betreiben der UV-C/A-Quelle (1) und ggf. zum Beheizen der TCO-Schichten integriert sind.

12. Gesichtsmaske nach einem der Ansprüche 1 bis 11, **dadurch gekennzeichnet, dass** mindestens eine der transluzenten oder semitransparenten Glasschichten (2) aus einem mittels eines Sol-Gel-Vefahren hergestellten Material besteht.

## Claims

1. A face mask for protecting against viral or bacterial infections, having at least one UV-C/A source and an inhalation section (10) for covering the nose and mouth region, **characterized in that** the inhalation section (10) comprises a composite of at least two translucent or semi-transparent glass layers (2), wherein the glass layers (2) are constructed as porous glass plates onto which a thin, catalytically active layer has been applied which can be activated with the aid of light in the ultraviolet wavelength region (UV) extending into the visible region of the spectrum, and wherein the glass layers can be at least temporarily irradiated by the UV-C/A source (1).

2. The face mask as claimed in claim 1, **characterized in that** the UV-C/A source (1) is disposed circumferentially on the outer contour of the inhalation section (10) between the glass layers (2) and irradiates the glass layers with UV light, preferably in the 185 nm - 280 nm wavelength region.

3. The face mask as claimed in claim 1 or claim 2, **characterized in that** the glass layers (2) are selectively coated with photoactive thin films produced from a transparent conducting oxide (TCO).

4. The face mask as claimed in claim 3, **characterized in that** the transparent conducting oxide has a thickness of 50 nm to 1000 nm and is a doped TiOₓ, ZnO, SnO₂ and/or SiOₓ semiconductor.

5. The face mask as claimed in one of the preceding claims, **characterized in that** the glass layers (2) are planar in configuration or shaped specifically for the application and the pores have a size of 1 nm to 1 µm.

6. The face mask as claimed in one of the preceding claims, **characterized in that** the outer contour of the inhalation section (10) is covered with an elastic barrier layer (6) produced from a material which is at least semi-transparent to UV irradiation.

7. The face mask as claimed in one of the preceding claims, **characterized in that** it has an external humidity generator which comprises a reservoir for liquid and units for transferring the liquid onto the glass layer composite.

8. The face mask as claimed in one of the preceding claims, **characterized in that** it has units for detecting and stabilizing the temperature and the humidity of the air to be inhaled.

9. The face mask as claimed in one of the preceding claims, **characterized in that** a transparent eye shield (7) is formed on the upper portion of the inhalation section (10) .

10. The face mask as claimed in claim 9, **characterized in that** the eye shield (7) is bordered by a barrier layer produced from black silicone (6).

11. The face mask as claimed in one of claims 1 to 10, **characterized in that** it can be positioned on the head of a user with the aid of an elastic retaining device, wherein power packs for operating the UV-C/A source (1) and optionally for heating the TCO layers are integrated into the retaining device.

12. The face mask as claimed in one of claims 1 to 11, **characterized in that** at least one of the translucent or semi-transparent glass layers (2) consists of a material produced by means of a sol-gel process.

## Revendications

1. Masque facial pour protéger des infections virales ou bactériennes, présentant au moins une source UV-C/A et une section d'inhalation (10) pour couvrir la région bouche-nez, **caractérisé en ce que**
la section d'inhalation (10) comprend un composite d'au moins deux couches de verre (2) translucides ou semi-transparentes, dans lequel les couches de verre (2) sont conçues en tant que plaques de verre poreuses, sur lesquelles une couche active catalytique fine est placée qui peut être activée jusqu'à la plage spectrale visible à l'aide de lumière dans la plage de longueurs d'ondes ultraviolettes (UV), et dans lequel les couches de verre peuvent être irradiées avec de la lumière UV temporairement par la source UV-C/A (1).

2. Masque facial selon la revendication 1, **caractérisé en ce que** la source UV-C/A (1) est disposée sur le contour extérieur de la section d'inhalation (10) de manière périphérique entre les couches de verre (2), et les couches de verre sont irradiées de lumière UV, de préférence dans la plage de longueur d'ondes de 185 nm - 280 nm.

3. Masque facial selon la revendication 1 ou 2, **caractérisé en ce que** les couches de verre (2) sont revêtues de manière sélective par des films fins photoactifs en oxyde conducteur transparent (TCO).

4. Masque facial selon la revendication 3, **caractérisé en ce que** la couche d'oxyde conducteur transparente présente une épaisseur de 50 nm à 1000 nm et est un semi-conducteur doté en TiOx, ZnO, SnO₂ et/ou SiOₓ.

5. Masque facial selon l'une des revendications précédentes, **caractérisé en ce que** les couches de verre (2), sont conçues planaires ou formées selon l'application et les pores présentent une taille de 1 nm à 1 µm.

6. Masque facial selon l'une des revendications précédentes, **caractérisé en ce que** le contour extérieur de la section d'inhalation (10) est couvert par une couche barrière élastique (6) en matériau au moins semi-transparent pour les rayons UV.

7. Masque facial selon l'une des revendications précédentes, **caractérisé en ce qu'**il présente un générateur d'humidité extérieur qui comprend un réservoir de liquide et des unités pour transférer le liquide au composite de couches de verre.

8. Masque facial selon l'une des revendications précédentes, **caractérisé en ce qu'**il présente des unités pour détecter et stabiliser la température et l'humidité de l'air à inhaler.

9. Masque facial selon l'une des revendications précédentes, **caractérisé en ce qu'**un écran pour les yeux transparent (7) est formé sur la partie supérieure de la section d'inhalation (10).

10. Masque facial selon la revendication 9, **caractérisé en ce que** l'écran pour les yeux (7) est bordé par une couche barrière en silicone noire (6).

11. Masque facial selon l'une des revendications 1 à 10, **caractérisé en ce qu'**il peut être positionné sur la tête d'un utilisateur à l'aide d'une fixation élastique, dans lequel des accumulateurs pour faire fonctionner la source UV-C/A (1) et le cas échéant pour chauffer les couches de TCO sont intégrés dans la fixation.

12. Masque facial selon l'une des revendications 1 à 11, **caractérisé en ce qu'**au moins une des couches de verre (2) translucides ou semi-transparentes est composée d'un matériau fabriqué par un procédé sol-gel.
